# EUROPÄISCHE PATENTSCHRIFT

(11) **EP 1 324 811 B1**
(45) Veröffentlichungstag und Bekanntmachung des Hinweises auf die Patenterteilung: **30.06.2004**
(21) Anmeldenummer: 01969739.0
(22) Anmeldetag: 19.09.2001
(51) Int. Cl.: B01D 3/14, B01D 3/42, C10G 7/12, C10G 7/02

(54) **VERFAHREN ZUR DESTILLATIVEN TRENNUNG VON C 5+-SCHNITTEN**
METHOD FOR CARRYING OUT THE DISTILLATIVE SEPARATION OF C 5+ CUTS
PROCEDE DE SEPARATION PAR DISTILLATION DE COUPES C5+

(30) Priorität: 20.09.2000 DE 10046609
(43) Veröffentlichungstag der Anmeldung: 09.07.2003
(73) Patentinhaber: BASF AKTIENGESELLSCHAFT, 67056 Ludwigshafen (DE)
(72) Erfinder: KAIBEL, Gerd, 68623 Lampertheim (DE); OOST, Carsten, 67098 Bad Dürkheim (DE); STROEZEL, Manfred, 68549 Ilvesheim (DE); MEYER, Gerald, 67067 Ludwigshafen (DE); TRÜBENBACH, Peter, 67134 Birkenheide (DE); SARTOR, Karl-Heinz, 77743 Neuried (DE); HENERS, Jürgen, 67098 Bad Dürkheim (DE)
(74) Vertreter: Isenbruck, Günter, Dr.
(86) Internationale Anmeldenummer: PCT/EP2001/010837
(87) Internationale Veröffentlichungsnummer: WO 2002/024300

(56) Entgegenhaltungen:
- EP-A- 0 780 147

## Beschreibung

Die Erfindung betrifft ein Verfahren zur destillativen Trennung von C₅₊-Schnitten sowie eine Vorrichtung zur Durchführung des Verfahrens.

In Raffinerien und petrochemischen Anlagen (Steamcracker, FCC-Cracker, Reformer) werden in großem Umfang Kohlenwasserstoffströme erzeugt, gelagert und verarbeitet. Um eine gezielte Verwendung in der Downstream-Wertschöpfungskette sicherzustellen, werden die Kohlenwasserstoffströme üblicherweise destillativ in verschiedene Fraktionen getrennt. Eine mengenmäßig bedeutende Fraktion ist dabei der C₅₊-Schnitt. Dieser enthält typischerweise ungesättigte Verbindungen, deren Anwesenheit insbesondere bei Verarbeitung und/oder Lagerung bekanntermaßen zu Problemen führt. Daher erfolgt in den meisten Fällen eine Selektiv- und/oder Vollhydrierung der aliphatischen Kohlenwasserstoffe. Üblicherweise werden die ungesättigten Kohlenwasserstoffe an Pdoder Ni-haltigen Katalysatoren in der Flüssigphase hydriert. Bei der selektiven Hydrierung des C₅₊-Schnittes werden bevorzugt die mehrfach ungesättigten Verbindungen wie beispielsweise Diene und Acetylene zu Monoenen und Styrol zu Ethylbenzol hydriert.

Der hydrierte C₅₊-Schnitt wird anschließend in den meisten Fällen zu Aromatengewinnung genutzt. Die weitere Aufarbeitung erfolgt üblicherweise durch geeignete Kombinationen aus Destillationen, Hydrierungen und/oder Extraktivdestillationen zur Aromatengewinnung.

Ein derartiges Verfahren wurde beispielsweise auf der DGMK-Konferenz "Selective Hydrogenation and Dehydrogenation" am 11. bis 12.11.1993 in Kassel vorgestellt und ist im Tagungsbericht 9305 der DGMK, Seiten 1 bis 30 mit folgender Verfahrenskette beschrieben: selektive Hydrierung des C₅-Schnitts aus dem Cracker, destillative Trennung in einen C₅-Schnitt, einen C₆₋₈-Schnitt und einen C₉₊-Schnitt, Vollhydrierung des C₆₋₈-Schnitts und Extraktivdestillation zur Aromatengewinnung.

Die destillative Trennung eines C₅₊-Schnitts, welcher auch als Roh-Benzol bezeichnet wird, ist in H.-G. Franck und J.W. Stadelhofer: "Industrielle Aromatenchemie", Springer-Verlag Berlin, 1987, Seiten 126ff. beschrieben; hiernach wird in einer ersten Kolonne der C₅₊-Schnitt in eine C₅-Fraktion und eine C₆₊-Fraktion aufgetrennt. In einer zweiten Kolonne erfolgt dann die Trennung der C₆₊-Fraktion in die C₆₋₈-Fraktion und eine C₉₊-Fraktion.

Der C₅₊-Schnitt ist ein komplexes Gemisch aus einer Vielzahl von Komponenten mit häufig geringen Unterschieden in den relativen Flüchtigkeiten. In allen bekannten destillativen Verfahren zu seiner Auftrennung sind, um Reinprodukte zu erhalten, stets mehrere Kolonnen erforderlich. Darüber hinaus unterliegt die Zusammensetzung des C₅-Schnitts Schwankungen, insbesondere aufgrund der unterschiedlichen Zusammensetzung des dem Cracker oder Reformer zugeführten Feed-Stromes sowie der Unterschiede im gewünschten Produktspektrum, die unterschiedliche Betriebsbedingungen des Crackers oder Reformers erforderlich machen.

Zur destillativen Auftrennung von Mehrkomponentengemischen sind sogenannte Trennwandkolonnen bekannt, das heißt Destillationskolonnen mit senkrechten Trennwänden, die in Teilbereichen eine Quervermischung von Flüssigkeits- und Brüdenströmen verhindern. Die Trennwand, die aus einem ebenen Blech besteht, unterteilt die Kolonne in Längsrichtung in deren mittleren Bereich in einen Zulaufteil und einen Entnahmeteil.

Ein ähnliches Ergebnis kann mit sogenannten thermisch gekoppelten Kolonnen erreicht werden, das heißt Anordnungen von mindestens zwei Kolonnen, wobei jede der Kolonnen mit jeder anderen mindestens zwei Verknüpfungen an räumlich getrennten Stellen aufweist.

Aus Chemical Engineering, Juli 2000, Seiten 27 bis 30 ist es grundsätzlich bekannt, Trennwandkolonnen zur Abtrennung von Benzol aus dieses enthaltenden Gemischen einzusetzen. Es ist hieraus jedoch nicht bekannt, unter welchen besonderen Verfahrensbedingungen diese als schwierig bekannten Trennaufgaben gelöst werden können.

Es ist demgegenüber Aufgabe der Erfindung, ein Verfahren zur destillativen Trennung von C₅₊-Schnitten in einer oder mehreren Trennwandkolonnen zur Verfügung zu stellen, wonach ein reines spezifikationsgerechtes Produkt als Mittelsiederfraktion abgezogen werden kann.

Die Lösung geht aus von einem Verfahren zur destillativen Trennung von C₅₊-Schnitten in eine Leichtsieder- (A), eine Mittelsieder- (B) und eine Hochsiederfraktion (C), in einer oder mehreren Trennwandkolonnen, in der (denen) eine Trennwand in Kolonnenlängsrichtung unter Ausbildung eines oberen gemeinsamen Kolonnenbereichs, eines unteren gemeinsamen Kolonnenbereichs, eines Zulaufteils mit Verstärkungsteil und Abtriebsteil sowie eines Entnahmeteils mit Verstärkungsteil und Abtriebsteil angeordnet ist, mit Zuführung des C₅₊-Schnitts im mittleren Bereich des Zulaufteils, Abführung der Hochsiederfraktion aus dem Kolonnensumpf, der Leichtsiederfraktion über den Kolonnenkopf und der Mittelsiederfraktion aus dem mittleren Bereich des Entnahmeteils.

Die Erfindung ist dadurch gekennzeichnet, daß das Aufteilungsverhältnis des Flüssigkeitsrücklaufs am oberen Ende der Trennwand in der Weise eingestellt wird, daß der Anteil an hochsiedenden Schlüsselkomponenten im Flüssigkeitsrücklauf über den Abtriebsteil des Entnahmeteils am oberen Ende der Trennwand 10 bis 80 %, bevorzugt 30 bis 50 % des in der Mittelsiederfraktion zugelassenen Grenzwerts beträgt, und daß die Heizleistung im Sumpfverdampfer der Trennwandkolonne in der Weise eingestellt wird, daß die Konzentration der leichtsiedenden Schlüsselkomponenten in der Flüssigkeit am unteren Ende der Trennwand 10 bis 80 %, bevorzugt 30 bis 50 % des im Mittelsiederfraktion zugelassenen Grenzwerts beträgt.

Der vorliegend als Ausgangsgemisch einzusetzende C₅₊-Schnitt bezeichnet in bekannter Weise ein Gemisch aus Kohlenwasserstoffen mit fünf und mehr Kohlenstoffatomen pro Molekül. Es enthält überwiegend n-Pentan, i-Pentan, Methylbutene, Cyclopentan, Benzol, Toluol, Ethylbenzol, Xylole. Hierbei kann es sich beispielsweise um hydrierte C₅₊-Schnitte, wie hydriertes Pyrolysebenzin handeln, das erfindungsgemäße Verfahren ist jedoch nicht darauf eingeschränkt, sondern allgemein für die destillative Trennung von C₅₊-Schnitten einsetzbar.

Es wurde überraschend gefunden, dass durch die erfindungsgemäße Verfahrensführung auch für schwankende Zulaufzusammensetzungen des C₅-Schnittes eine energieoptimale Durchführung der destillativen Auftrennung möglich ist unter Erhalt guter Werte für die Spezifikation der Mittelsiederfraktion. Insbesondere war die bekannte Berechnungsformel auf Grundlage der relativen Flüchtigkeiten, die für Dreistoff-Gemische anwendbar ist, vorliegend nicht brauchbar, da sich die Zulaufzusammensetzungen stark verschieben können und die Wahl einer speziellen Komponente oder repräsentativer Komponentenzusammenfassungen problematisch ist.

Trennwandkolonnen weisen typischerweise eine in Kolonnenlängsrichtung ausgerichtete Trennwand auf, die den Kolonneninnenraum in die folgenden Teilbereiche unterteilt: einen oberen gemeinsamen Kolonnenbereich, einen unteren gemeinsamen Kolonnenbereich sowie einen Zulaufteil und einen Entnahmeteil, jeweils mit Verstärkungsteil und Abtriebsteil. Das aufzutrennende Gemisch, vorliegend der C₅₊-Schnitt, wird im mittleren Bereich des Zulaufteils aufgegeben, eine Hochsiederfraktion wird aus dem Kolonnensumpf, eine Leichtsiederfraktion über den Kolonnenkopf und eine Mittelsiederfraktion aus dem mittleren Bereich des Entnahmeteils entnommen.

Bei der Trennung von Mehrstoffgemischen in eine Leichtsieder-, eine Mittelsieder- und eine Hochsiederfraktion werden üblicherweise Spezifikationen über den maximal zulässigen Anteil an Leichtsiedern und Hochsiedern in der Mittelsiederfraktion vorgegeben. Hierbei werden für das Trennproblem kritische Komponenten, sogenannte Schlüsselkomponenten, spezifiziert. Dabei kann es sich um eine einzelne Schlüsselkomponente oder um die Summe von mehreren Schlüsselkomponenten handeln. Im vorliegenden Verfahren sind Schlüsselkomponenten für die Mittelsiederfraktion z.B., sofern als solche eine Benzol-Toluol-Xylol-Fraktion abgezogen wird, Cyclopentan, Cyclopenten, Hexan und Hexen (leichtsiedende Schlüsselkomponenten) und Nonan (schwersiedende Schlüsselkomponente).

Es wurde überraschend gefunden, daß die Einhaltung der Spezifikation bezüglich der Schlüsselkomponenten durch die erfindungsgemäße Verfahrensführung gewährleistet werden kann, indem das Aufteilungsverhältnis der Flüssigkeit am oberen Ende der Trennwand sowie die Heizleistung der Verdampfer in bestimmter Weise geregelt werden. Dabei wird das Aufteilungsverhältnis der Flüssigkeit am oberen Ende der Trennwand in der Weise eingestellt, daß der Anteil an hochsiedenden Schlüsselkomponenten im Flüssigkeitsrücklauf über den Abtriebsteil des Entnahmeteils 10 bis 80%, bevorzugt 30 bis 50% des in der Mittelsiederfraktion zugelassenen Grenzwerts beträgt, und daß die Heizleistung im Sumpfverdampfer der Trennwandkolonne in der Weise eingestellt wird, daß die Konzentration der leichtsiedenden Schlüsselkomponenten in der Flüssigkeit am unteren Ende der Trennwand 10 bis 80, bevorzugt 30 bis 50% des in der Mittelsiederfraktion zugelassenen Grenzwerts beträgt. Entsprechend wird bei dieser Regelung die Flüssigkeitsaufteilung am oberen Ende der Trennwand dahingehend eingestellt, daß bei höheren Gehalten an hochsiedenden Schlüsselkomponenten mehr und bei geringeren Gehalten derselben weniger Flüssigkeit auf den Zulaufteil geleitet wird. Analog wird die Regelung der Heizleistung dahingehend vorgenommen, daß bei höherem Gehalt an leichtsiedenden Schlüsselkomponenten die Heizleistung erhöht und bei niedrigerem Gehalt derselben die Heizleistung verringert wird.

Es wurde gefunden, daß eine weitere Verbesserung des Verfahrens erreicht werden kann, indem durch entsprechende Regelvorschriften eine weitgehend gleichmäßige Beaufschlagung mit Flüssigkeit gesichert wird. Störungen der Zulaufmenge oder der Zulaufkonzentration werden kompensiert Vorliegend ist der obere Bereich des Zulaufteils besonders empfindlich, da hier bei einer optimierten Fahrweise nur sehr geringe Flüssigkeitsmengen auftreten. Die beanspruchte Regelung einer unteren Begrenzung der Flüssigkeitsbelastung in diesem Kolonnenteil ist eine einfache und wirksame Maßnahme, um ein Versagen der Kolonne durch Entnetzen der Trenneinbauten zu vermeiden. Hierzu wird erfindungsgemäß sichergestellt, daß die Flüssigkeitsaufteilung am oberen Ende der Trennwand in der Weise geregelt wird, daß die Flüssigkeitsbelastung im Verstärkungsteil des Zulaufteils nicht unter 30 % ihres Normalwerts sinkt.

Bevorzugt wird auch die Aufteilung der aus dem Abtriebsteil des Entnahmeteils der Trennwandkolonne ablaufende Flüssigkeit auf die abgezogene Mittelsiederfraktion und den Verstärkungsteil des Entnahmeteils der Trennwandkolonne in der Weise geregelt, daß die auf den Verstärkungsteil aufgegebene Flüssigkeitsmenge nicht unter 30% ihres Normalwerts sinkt. Wie vorstehend zum oberen Bereich des Zulaufteils ausgeführt, treten auch in diesem Kolonnenteil bei optimierter Fahrweise nur sehr geringe Flüssigkeitsbelastungen auf. Durch die bevorzugte Verfahrensmaßnahme wird in einfacher und wirksamer Weise ein Versagen der Kolonne vermieden.

Zur Aufteilung und Entnahme der Flüssigkeiten am oberen Ende der Trennwand bzw. an der Seitenabzugsstelle im mittleren Bereich des Entnahmeteils eignen sich sowohl innenliegende als auch außerhalb der Kolonne angeordnete Auffangräume für die Flüssigkeit, die die Funktion einer Pumpenvorlage übernehmen oder für eine ausreichend hohe statische Flüssigkeitshöhe sorgen und eine durch Stellorgane, beispielsweise Ventile, geregelte Flüssigkeitsweiterleitung ermöglichen. Bei Bodenkolonnen ist es besonders günstig, hierzu den Ablaufschacht auf etwa das 2- bis 3-fache der üblichen Höhe zu vergrößern und in ihm die entsprechende Flüssigkeitsmenge zu speichern. Bei der Verwendung von gepackten Kolonnen wird die Flüssigkeit zunächst in Sammlern gefaßt und von dort aus in einen innenliegenden oder außenliegenden Auffangraum geleitet.

Die Mittelsiederfraktion wird bevorzugt in flüssiger Form entnommen; diese Verfahrensvariante ist thermisch vorteilhaft und apparativ einfacher zu realisieren.

In einer bevorzugten Verfahrensvariante kann der Brüdenstrom am unteren Ende der Trennwand so eingestellt werden, daß das Mengenverhältnis des Brüdenstroms im Zulaufteil zum Brüdenstrom im Entnahmeteil 0,8 bis 1,2, bevorzugt 0,9 bis 1,1 und der Rücklauf aus dem oberen gemeinsamen Kolonnenteil so geregelt werden, daß das Verhältnis des Rücklaufstroms im Zulaufteil zum Rücklauf im Entnahmeteil 0,1 bis 2, bevorzugt 0,3 bis 0,6 beträgt, vorzugsweise durch die Wahl und/oder Dimensionierung trennwirksamer Einbauten und/oder den Einbau druckverlusterzeugender Einrichtungen.

Weiter bevorzugt kann die Entnahme des Kopfstroms temperaturgeregelt erfolgen, wobei die Meßstelle für die Regeltemperatur im oberen gemeinsamen Teilbereich der Kolonne, an einer Stelle angeordnet ist, die um 3 bis 8, bevorzugt um 4 bis 6 theoretische Trennstufen unterhalb des oberen Kolonnenendes angeordnet ist.

Entsprechend einer weiteren bevorzugten Verfahrensvariante kann die Entnahme des Hochsiederstroms temperaturgeregelt erfolgen, wobei die Meßstelle für die Regeltemperatur im unteren gemeinsamen Kolonnenbereich um 3 bis 8, bevorzugt um 4 bis 6 theoretische Trennstufen oberhalb des unteren Endes der Kolonne angeordnet ist.

Die adäquate Wahl der Meßstellen für die Regeltemperaturen ist wegen der unterschiedlichen Zulaufzusammensetzungen nicht trivial.

Gemäß einer weiteren Verfahrensvariante erfolgt die Entnahme der Mittelsiederfraktion standgeregelt, wobei als Regelgröße der Flüssigkeitsstand im Verdampfer oder im Sumpf der Kolonne verwendet wird. Üblicherweise wird der Sumpfstand über den Sumpfabzug geregel. Eine derartige, übliche Regelung führte jedoch im vorliegenden Verfahren zu unbefriedigendem Regelverhalten. Das beanspruchte bevorzugte Regelkonzept mit einer Regelung des Sumpfstandes über die Seitenentnahme verbesserte die Stabilität deutlich.

Bevorzugt ist ein Betriebsdruck im Bereich von 0,5 bis 5 bar, insbesondere von 1 bis 2 bar.

Besonders geeignet für das erfindungsgemäße Verfahren sind Trennwandkolonnen mit 20 bis 60, bevorzugt mit 25 bis 45 theoretischen Trennstufen.

Die Aufteilung der Trennstufenzahl auf die einzelnen Teilbereiche der Trennwandkolonne erfolgt dabei bevorzugt in der Weise, daß jeder der 6 Kolonnenbereiche der Trennwandkolonne jeweils 5 bis 50%, bevorzugt 15 bis 30% der Gesamtzahl der theoretischen Trennstufen der Trennwandkolonne aufweist.

Die Aufteilung der theoretischen Trennstufen auf die Kolonnenteilbereiche kann dabei bevorzugt in der Weise erfolgen, daß die Anzahl der theoretischen Trennstufen im Zulaufteil 80 bis 110%, bevorzugt 90 bis 100% der Summe der Zahl der theoretischen Trennstufen im Entnahmeteil beträgt.

In einer bevorzugten Ausgestaltung der verwendeten Trennwandkolonne können die Zulaufstelle des aufzutrennenden Stroms und die Entnahmestelle der Mittelsiederfraktion auf unterschiedliche Höhe in der Kolonne angeordnet sein, vorzugsweise um 1 bis 20, insbesondere um 3 bis 8 theoretische Trennstufen beabstandet.

Bezüglich der einsetzbaren trennwirksamen Einbauten in der Trennwandkolonne gibt es grundsätzlich keine Einschränkungen: hierzu sind sowohl Füllkörper als auch geordnete Packungen oder Böden geeignet. Aus Kostengründen werden bei Kolonnen mit einem Durchmesser über 1,2 m in der Regel Böden, bevorzugt Ventil- oder Siebböden eingesetzt. Bei den Packungskolonnen sind geordnete Blechpackungen mit einer spezifischen Oberfläche von 100 bis 500 m²/m³, bevorzugt von etwa 250 bis 300 m²/m³ besonders geeignet.

Bei besonders hohen Anforderungen an die Produktreinheit ist es günstig, insbesondere für den Fall, daß Packungen als trennwirksame Einbauten eingesetzt werden, die Trennwand mit einer thermischen Isolierung auszustatten. Eine derartige Ausgestaltung der Trennwand ist beispielsweise in EP-A-0 640 367 beschrieben. Besonders günstig ist eine doppelwandige Ausführung mit dazwischenliegendem engem Gasraum.

Erfindungsgemäß ist es auch möglich, anstelle der Trennwandkolonne thermisch gekoppelte Kolonnen einzusetzen. Anordnungen mit thermisch gekoppelten Kolonnen sind hinsichtlich des Energiebedarfs mit einer Trennwandkolonne gleichwertig. Diese Erfindungsvariante bietet sich als wirtschaftlich vorteilhafte Alternative insbesondere bei Verfügbarkeit von bestehenden Kolonnen an. Die geeignetsten Formen der Zusammenschaltung können je nach Trennstufenzahl der vorhandenen Kolonnen ausgewählt werden.

Die thermisch gekoppelten Kolonnen können somit jeweils mit einem eigenen Verdampfer und/oder Kondensator ausgestattet sein.

In einer bevorzugten Verschaltung der thermisch gekoppelten Kolonne werden die Leichtsiederfraktion und die Hochsiederfraktion aus unterschiedlichen Kolonnen entnommen, wobei der Betriebsdruck der Kolonne, aus der die Hochsiederfraktion entnommen wird, tiefer eingestellt wird als der Betriebsdruck der Kolonne, aus der die Leichtsiederfraktion entnommen wird, bevorzugt um 0,1 bis 2 bar.

Gemäß einer besonderen Verschaltungsform ist es möglich, den Sumpfstrom der ersten Kolonne in einem Verdampfer teilweise oder vollständig zu verdampfen und anschließend der zweiten Kolonne zweiphasig oder in Form eines gasförmigen und eines flüssigen Stromes zuzuführen.

Das erfindungsgemäße Verfahren kann bevorzugt sowohl bei der Verwendung einer Trennwandkolonne als auch von thermisch gekoppelten Kolonnen in der Weise geführt werden, daß der Zulaufstrom teilweise oder vollständig vorverdampft wird und der Kolonne zweiphasig oder in Form eines gasförmigen und eines flüssigen Stromes zugeführt wird.

Diese Vorverdampfung bietet sich insbesondere dann an, wenn der Sumpfstrom der ersten Kolonne größere Mengen an Mittelsiedern enthält. In diesem Fall kann die Vorverdampfung auf einem niedrigeren Temperaturniveau erfolgen und der Verdampfer der zweiten Kolonne entlastet werden. Weiterhin wird durch diese Maßnahme der Abtriebsteil der zweiten Kolonne wesentlich entlastet. Der vorverdampfte Strom kann dabei der zweiten Kolonne zweiphasig oder in Form von zwei separaten Strömen zugeführt werden.

Die Trennwandkolonne zur Durchführung des erfindungsgemäßen Verfahrens weist bevorzugt am oberen und am unteren Ende der Trennwand Probenahmemöglichkeiten auf, über die aus der Kolonne kontinuierlich oder in zeitlichen Abständen flüssige und/oder gasförmige Proben entnommen und hinsichtlich ihrer Zusammensetzung, bevorzugt gaschromatographisch, untersucht werden. Beim erfindungsgemäßen Verfahren der destillativen Auftrennung von C₅-Schnitten können Zulaufzusammensetzungen anfallen, die außerhalb der technischen Auslegungsrechnungen liegen. In diesem Fall bietet die bei Trennwandkolonnen sonst nicht übliche Anordnung von Probenahmestutzen am oberen und unteren Ende der Trennwand und die Analyse von Proben eine wirksame Hilfe, um geeignete Betriebsbedingungen festzulegen.

In der Ausführungsvariante mit thermisch gekoppelten Kolonnen sind die Probenahmemöglichkeiten analog, in den Verbindungsleitungen zwischen den den Teilbereichen der Tennwandkolonne entsprechenden Bereichen der thermisch gekoppelten Kolonnen angeordnet.

In einer bevorzugten Ausführungsform werden in der Trennwandkolonne oder in den thermisch gekoppelten Kolonnen Böden eingesetzt, deren Druckverlust stetig mit zunehmender Gasbelastung ansteigt, bevorzugt um mindestens 10 % pro Erhöhung des F-Faktors um 0,5 Pa^{0,5}. Hierbei bezeichnet der F-Faktor (Dimension: Pascal) in bekannter Weise die Gasbelastung in Form des Produktes aus der Gasgeschwindigkeit in der Dimension m/s und der Quadratwurzel aus der Gasdichte in der Dimension kg/m³. Die technische Anweisung, bei Trennwandkolonnen mit Böden bevorzugt nur solche Einbauten einzusetzen, deren Druckverlust stetig mit der Gasbelastung steigt, ist neu. Sie gewährleistet eine erhöhte Betriebssicherheit der Kolonne. Bei bestimmten Glockenböden zeiget es sich beispielsweise, daß beim Anfahren der Kolonne oder einer erneuten Anhebung der Gasbelastung teilweise entweder der Zulaufteil oder der Entnahmeteil der Kolonne nicht mehr von Gas durchströmt wurden, wodurch ein bestimmungsgemäßer Betrieb nicht mehr gewährleistet war.

Die Erfindung wird im folgenden anhand einer Zeichnung sowie von Ausführungsbeispielen näher erläutert.

In den Figuren bezeichnen gleiche Bezugsziffem gleiche oder entsprechende Merkmale.

Es zeigen im einzelnen:
- Fig.1: die schematische Darstellung einer Trennwandkolonne zur Durchführung des erfindungsgemäßen Verfahrens,
- Fig. 2 - 9: unterschiedliche Verschaltungen von thermisch gekoppelten Kolonnen und
- Fig. 10 - 12: Verschaltungen von jeweils zwei Trennwandkolonnen zur destillativen Trennung von C₅₊-Schnitten.

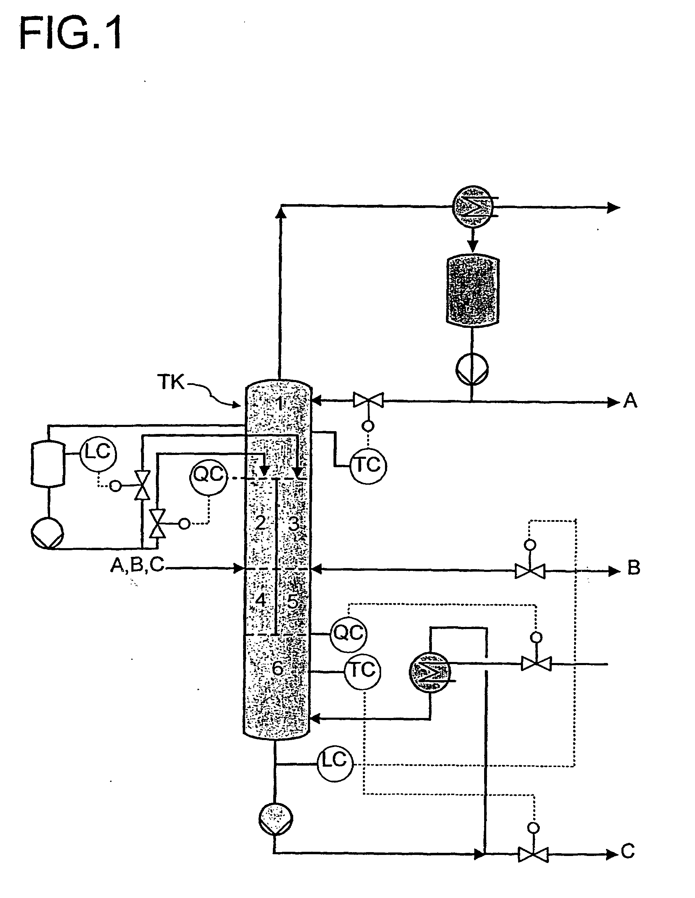

Figur 1 zeigt schematisch eine Trennwandkolonne (TK) mit darin vertikal angeordneter Trennwand (T), die die Kolonne in einen oberen gemeinsamen Kolonnenbereich 1, einen unteren gemeinsamen Kolonnenbereich 6, einen Zulaufteil 2, 4 mit Verstärkungsteil 2 und Abtriebsteil 4 sowie einen Entnahmeteil 3, 5 mit Abtriebsteil 3 und Verstärkungsteil 5 aufteilt. Die Zuführung des aufzutrennenden Gemisches (A, B, C) erfolgt im mittleren Bereich des Zulaufteils 2, 4. Am Kolonnenkopf wird die Leichtsiederfraktion (A), aus dem Kolonnensumpf die Hochsiederfraktion (C) und aus dem mittleren Bereich des Entnahmeteils 3, 5 die Mittelsiederfraktion (B) abgezogen. Erfindungsgemäß wird die Aufteilung des Flüssigkeitsrücklaufs (QC) am oberen und am unteren Ende der Kolonne geregelt. Bevorzugt kann, wie in Figur 1 dargestellt, die Entnahme des Kopfstroms (A) sowie die Entnahme des Hochsiederstroms (C) temperaturgeregelt (TC) erfolgen. Bevorzugt erfolgt die Entnahme der Mittelsiederfraktion (B) standgeregelt, wobei als Regelgröße der Flüssigkeitsstand (LC) im Verdampfer oder im Sumpf der Kolonne verwendet wird.

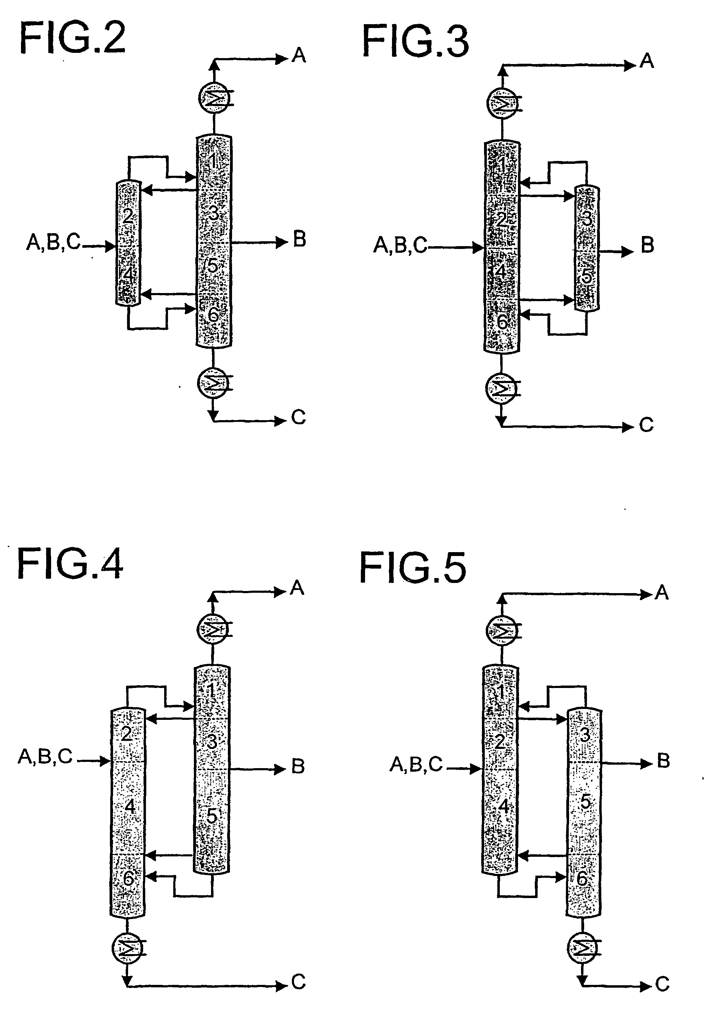

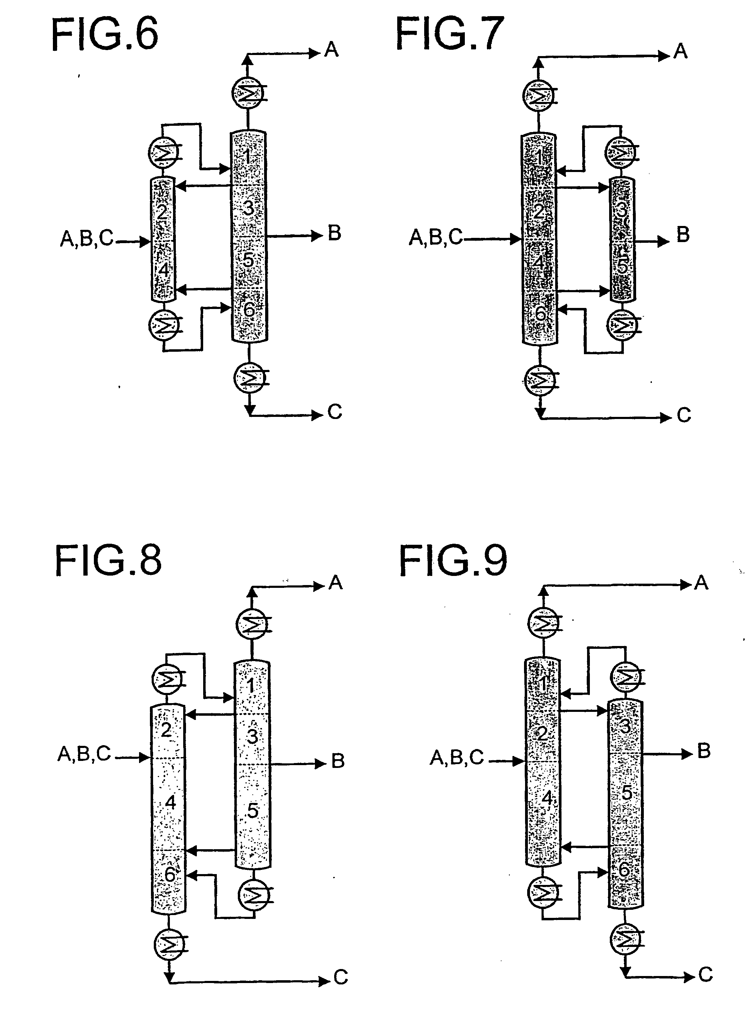

In den in den Figuren 2 bis 5 dargestellten Vorrichtungsvarianten mit thermisch gekoppelten Kolonnen werden die Teilbereiche 1 bis 6 der Trennwandkolonne durch jeweils unterschiedliche Bereiche der thermisch gekoppelten Kolonnen übernommen. Entsprechende Bereiche sind durch die jeweils gleichen Bezugsziffern gekennzeichnet. Besonders bevorzugte Ausführungsformen, wonach der Hochsiederstrom (C) und der Leichtsiederstrom (A) aus jeweils unterschiedlichen Kolonnen abgezogen werden, sind in den Figuren 4 und 5 dargestellt. Bevorzugt werden hierbei die beiden Kolonnen mit unterschiedlichem Betriebdruck beschrieben, wobei der Betriebsdruck der Kolonne, aus der die Hochsiederfraktion (C) entnommen wird, tiefer liegt als der Betriebsdruck der Kolonne, aus der die Leichtsiederfraktion (A abgezogen wird, bevorzugt um 0,1 bis 2 bar tiefer. Die Figuren 6 bis 9 zeigen bevorzugte Ausführungsvarianten mit thermisch gekoppelten Kolonnen, mit jeweils eigenem Sumpfverdampfer und eigenem Kondensator.

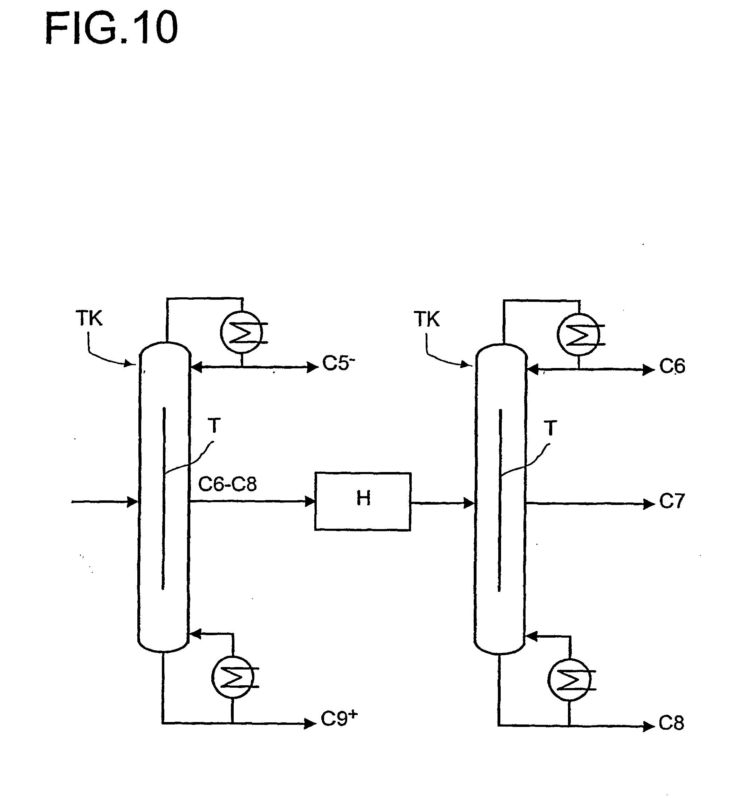

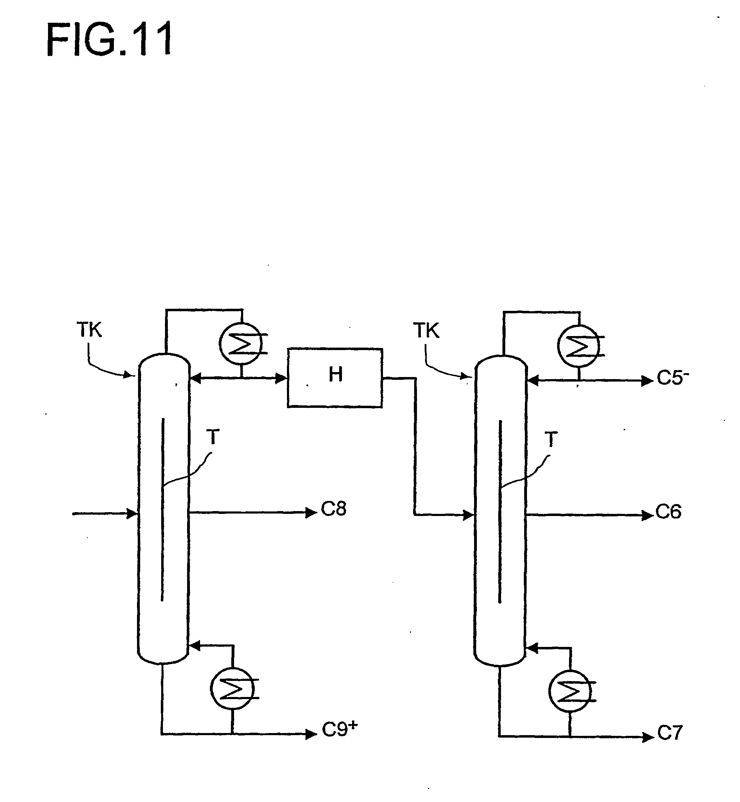

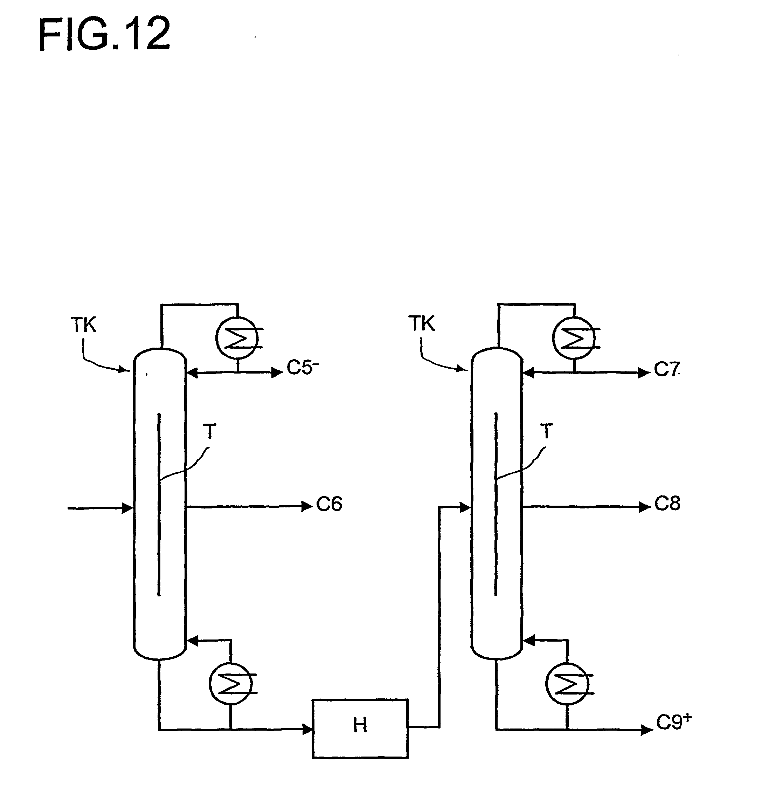

Die Figuren 10 bis 12 zeigen besondere Verschaltungen von Trennwandkolonnen zur destillativen Trennung von C₅₊-Schnitten. Dabei wird bevorzugt in jeder der dargestellten Trennwandkolonnen (TK) nach dem erfindungsgemäßen Verfahren gearbeitet. Figur 10 zeigt als Beispiel die Auftrennung von Pyrolysebenzin in eine C₅₋-Fraktion, eine C₉₊-Fraktion und eine C₆ - C₈-Franktion. Die C₆ - C₈-Fraktion kann, gegebenenfalls nach Hydrierung H, in einer weiteren Trennwandkolonne in eine C₆-Fraktion, eine C₇-Fraktion und eine C₈-Fraktion aufgetrennt werden. Ebenso ist es möglich, in der Trennwandkolonne zunächst die C₉₊-Fraktion über Sumpf abzutrennen, die C₈-Fraktion über den Seitenabzug zu gewinnen und das Kopfprodukt in einer weiteren Trennwandkolonne, gegebenenfalls nach Hydrierung H, in die C₅₋-Fraktion, C₆-Fraktion und C₇-Fraktion aufzutrennen (Figur 11). Weiterhin ist es möglich, in einer Trennwandkolonne zunächst die C₅₋-Fraktion als Kopfprodukt zu gewinnen und die C₆-Fraktion über den Seitenabzug zu entnehmen. In diesem Fall kann das Sumpfprodukt, gegebenenfalls nach Hydrierung H, in einer nachgeschalteten Trennwandkolonne in die C₇-Fraktion, C₈-Fraktion und C₉₊-Fraktion aufgetrennt werden (Figur 12).

### Beispiel

Ein C₅₊-Schnitt aus der Hydrierung von Pyrolysebenzin mit der nachstehend angegebenen Zusammensetzung wurde destillativ aufgetrennt:

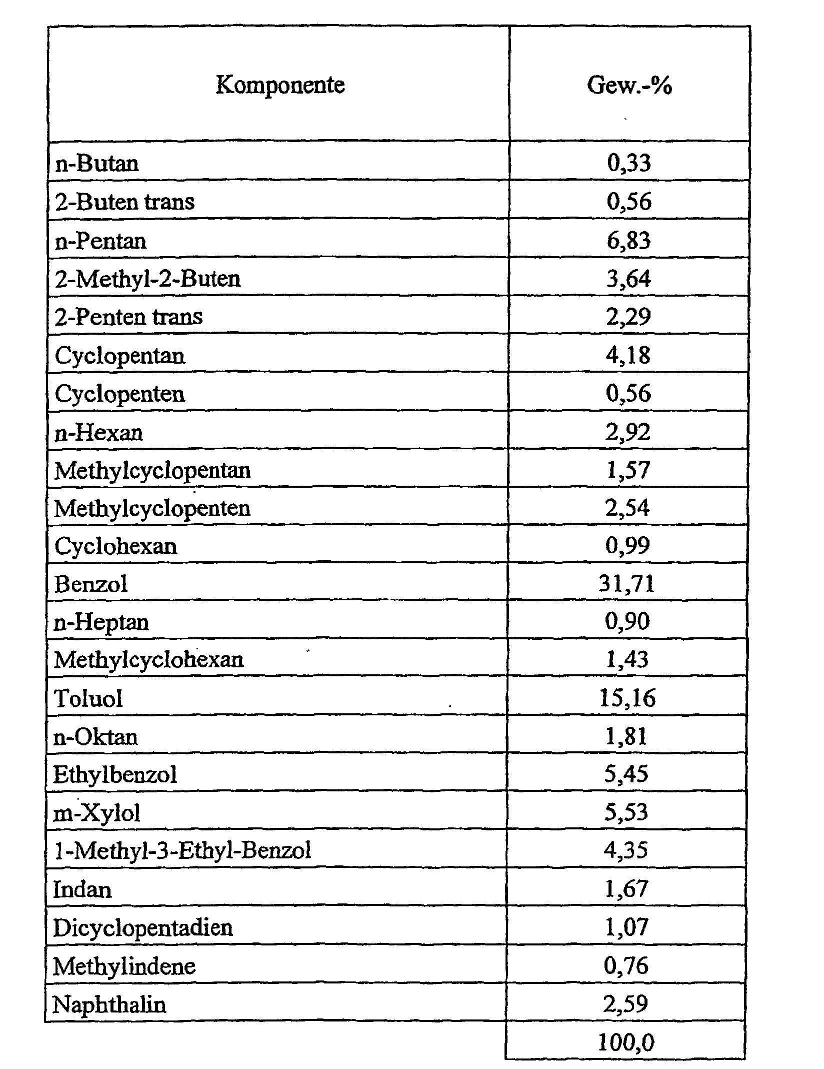

Dieser C₅₊-Schnitt wurde in einen C₅-Schnitt (Leichtsiederfraktion), einen Bezol-Toluol-Xylol-Schnitt, im folgenden abgekürzt als BTX-Schnitt bezeichnet (Mittelsiederfraktion) und einen C₉₊-Schnitt (Schwersiederfraktion) aufgetrennt. Als Spezifikation für die Trennung wurde gefordert, daß der C₅-Schnitt einen Benzolgehalt von 0,05 Gew.-% und der C₉₊-Schnitt einen Xylolgehalt von 1,8 Gew.-% hat. Darüber hinaus wurde als Spezifikation für den BTX-Schnitt ein C₅-Gehalt (leichtsiedende Schlüsselkomponenten) < 5 Gew.-%, ein C₉₊-Gehalt (schwersiedende Schlüsselkomponenten) < 1,5 Gew.-% und eine Ausbeute von mindestens 77,8 % verlangt.

Die Auftrennung wurde in einer Trennwandkolonne, wie in Fig. 1 dargestellt, durchgeführt.

Alternativ wurde die Trennwandkolonne durch eine Verschaltung von zwei thermisch gekoppelten Kolonnen, wie in Fig. 9 dargestellt, ersetzt.

In beiden Alternativen wurde die Heizleistung im Sumpfverdampfer der Trennwandkolonne bzw. der ersten der thermisch gekoppelten Kolonnen so eingestellt, daß die Summe der Konzentrationen an Cyclopentan und Pentan (leichtsiedende Schlüsselkomponenten) in der Flüssigkeit am unteren Ende der Trennwand bzw. im unteren Austauschstrom zwischen den thermisch gekoppelten Kolonnen kleiner als 1,5 Gew.-% war. Gleichzeitig wurde das Aufteilungsverhältnis des Flüssigkeitsrücklaufs am oberen Ende der Trennwand bzw. im oberen Austauschstrom zwischen den thermisch gekoppelten Kolonnen so eingestellt, daß die Summe der Konzentrationen an Indan und Dicyclopentadien im Flüssigkeitsrücklauf auf den Verstärkungsteil des Zulaufteils bzw. den entsprechenden Kolonnenteil in der Alternative mit thermisch gekoppelten Kolonnen kleiner als 0,5 Gew.-% war.

Mit dieser Regelung konnte die vorgegebene, oben aufgeführte Spezifikation eingehalten werden, nicht jedoch bei einer Verfahrensführung ohne die oben beschriebene Regelung.

## Patentansprüche

1. Verfahren zur destillativen Trennung von C₅₊-Schnitten in eine Leichtsieder- (A), eine Mittelsieder- (B) und eine Hochsiederfraktion (C) in einer oder mehreren Trennwandkolonnen (TK), in der (denen) eine Trennwand (T) in Kolonnenlängsrichtung unter Ausbildung eines oberen gemeinsamen Kolonnenbereichs (1), eines unteren gemeinsamen Kolonnenbereichs (6), eines Zulaufteils (2, 4) mit Verstärkungsteil (2) und Abtriebsteil (4) sowie eines Entnahmeteils (3, 5) mit Verstärkungsteil (5) und Abtriebsteil (3) angeordnet ist, mit Zuführung des C₅₊-Schnitts (A, B, C) im mittleren Bereich des Zulaufteils (2, 4), Abführung der Hochsiederfraktion (C) aus dem Kolonnensumpf, der Leichtsiederfraktion (A) über den Kolonnenkopf und der Mittelsiederfraktion (B) aus dem mittleren Bereich des Entnahmeteils (3, 5), **dadurch gekennzeichnet, daß** das Aufteilungsverhältnis des Flüssigkeitsrücklaufs am oberen Ende der Trennwand (T) in der Weise eingestellt wird, daß der Anteil an hochsiedenden Schlüsselkomponenten im Flüssigkeitsrücklauf über den Abtriebsteil (3) des Entnahmeteils am oberen Ende der Trennwand (T) 10 bis 80 %, bevorzugt 30 bis 50 % des in der Mittelsiederfraktion (B) zugelassenen Grenzwerts beträgt, und daß die Heizleistung im Sumpfverdampfer der Trennwandkolonne (TK) in der Weise eingestellt wird, daß die Konzentration der leichtsiedenden Schlüsselkomponenten in der Flüssigkeit am unteren Ende der Trennwand (T) 10 bis 80 %, bevorzugt 30 bis 50 % des in der Mittelsiederfraktion (B) zugelassenen Grenzwerts beträgt.

2. Verfahren nach Anspruch 1, **dadurch gekennzeichnet, daß** die Flüssigkeitsaufteilung am oberen Ende der Trennwand (T) in der Weise geregelt wird, daß die Flüssigkeitsbelastung im Verstärkungsteil (2) des Zulaufteils (2, 4) nicht unter 30 % ihres Normalwerts sinkt.

3. Verfahren nach Anspruch 1 oder 2, **dadurch gekennzeichnet, daß** die Aufteilung der aus dem Abtriebsteil (3) des Entnahmeteils (3, 5) der Trennwandkolonne (TK) ablaufenden Flüssigkeit auf die abgezogene Mittelsiederfraktion (B) und den Verstärkungsteil (5) des Entnahmeteils (3, 5) der Trennwandkolonne (TK) durch eine Regelung in der Weise eingestellt wird, daß die auf den Verstärkungsteil (5) aufgegebene Flüssigkeitsmenge nicht unter 30 % ihres Normalwertes sinkt.

4. Verfahren nach Anspruch einem der Ansprüche 1 bis 3, **dadurch gekennzeichnet, daß** die Mittelsiederfraktion (B) in flüssiger Form entnommen wird.

5. Verfahren nach einem der Ansprüche 1 bis 4, **dadurch gekennzeichnet, daß** der Brüdenstrom am unteren Ende der Trennwand (T) in der Weise eingestellt wird, daß das Verhältnis des Brüdenstroms im Zulaufteil (2, 4) zum Brüdenstrom im Entnahmeteil (3, 5) 0,8 bis 1,2, bevorzugt 0,9 bis 1,1 und daß der Rücklauf aus dem oberen gemeinsamen Kolonnenteil (1) in der Weise geregelt wird, daß das Verhältnis des Rücklaufstroms im Zulaufteil (2, 4) zum Rücklauf im Entnahmeteil (3, 5) 0,1 bis 1,0, bevorzugt 0,3 bis 0,6 beträgt, vorzugsweise durch die Wahl und/oder Dimensionierung trennwirksamer Einbauten und/oder den Einbau druckverlusterzeugender Einrichtungen.

6. Verfahren nach einem der Ansprüche 1 bis 5, **dadurch gekennzeichnet, daß** die Entnahme des Kopfstroms (A) temperaturgeregelt erfolgt, wobei die Meßstelle für die Regeltemperatur im oberen gemeinsamen Teilbereich ( 1 ) der Kolonne, an einer Stelle angeordnet ist, die um 3 bis 8, bevorzugt 4 bis 6 theoretische Trennstufen unterhalb des oberen Kolonnenendes angeordnet ist.

7. Verfahren nach einem der Ansprüche 1 bis 6, **dadurch gekennzeichnet, daß** die Entnahme des Hochsiederstroms (C) temperaturgeregelt erfolgt, wobei die Meßstelle für die Regeltemperatur im unteren gemeinsamen Kolonnenbereich (6), um 3 bis 8, bevorzugt um 4 bis 6 theoretische Trennstufen oberhalb des unteren Endes der Kolonne angeordnet ist.

8. Verfahren nach einem der Ansprüche 4 bis 7, **dadurch gekennzeichnet, daß** die Entnahme der Mittelsiederfraktion (B) standgeregelt erfolgt und als Regelgröße der Flüssigkeitsstand im Verdampfer oder im Sumpf der Kolonne verwendet wird.

9. Verfahren nach einem der Ansprüche 1 bis 8, **dadurch gekennzeichnet, dass** man eine Trennwandkolonne (TK) mit 20 bis 60, bevorzugt mit 25 bis 45 theoretischen Trennstufen verwendet.

10. Verfahren nach Anspruch 9, **dadurch gekennzeichnet, daß** jeder der Kolonnenbereiche 1 bis 6 jeweils 5 bis 50 %, bevorzugt 15 bis 30 % der Gesamtzahl der theoretischen Trennstufen der Trennwandkolonne (TK) aufweist.

11. Verfahren nach Anspruch 9 oder 10, **dadurch gekennzeichnet, daß** die Zulaufstelle des Stroms (A, B, C) und die Entnahmestelle der Mittelsiederfraktion (B) auf unterschiedlicher Höhe in der Kolonne angeordnet sind, vorzugsweise um 1 bis 20, insbesondere um 3 bis 8 theoretische Trennstufen beabstandet.

12. Verfahren nach einem der Ansprüche 9 bis 11, **dadurch gekennzeichnet, daß** am oberen und am unteren Ende der Trennwand (TK) Probenahmemöglichkeiten eingerichtet sind, über die aus der Kolonne kontinuierlich oder in zeitlichen Abständen flüssige und/oder gasförmige Proben entnommen werden und hinsichtlich ihrer Zusammensetzung, bevorzugt gaschromatographisch, untersucht werden.

13. Verfahren zur destillativen Trennung von C₅₊-Schnitten in eine Leichtsieder- (A), eine Mittelsieder- (B) und Hochsiederfraktion (C) in thermisch gekoppelten Kolonnen mit Kolonnenbereichen (1, 2, 3, 4, 5, 6), die den in einer Trennwandkolonne (TK) in Kolonnenlängsrichtung angeordnete Trennwand (T) ausgebildeten Kolonnenbereichen:
- oberer gemeinsamer Kolonnenbereich (1),
- unterer gemeinsamer Kolonnenbereich (6),
- Zulaufteil (2, 4) mit Verstärkungsteil (2) und Abtriebsteil (4) sowie
- Entnahmeteil (3, 5) mit Verstärkungsteil (5) und Abtriebsteil (3)
entsprechen, mit Zuführung des C₅₊-Schnitts (A, B, C) im mittleren Bereich des dem Zulaufteil (2, 4) entsprechenden Kolonnenbereichs, Abführung der Hochsiederfraktion (C) aus dem Kolonnensumpf unterhalb des dem unteren gemeinsamen Kolonnenbereich (6) entsprechenden Kolonnenbereichs, der Leichtsiederfraktion (A) über den Kolonnenkopf oberhalb des dem oberen gemeinsamen Kolonnenbereichs (1) entsprechenden Kolonnenbereichs und der Mittelsiederfraktion (B) aus einem dem mittleren Bereich des Entnahmeteils (3, 5) entsprechenden Kolonnenbereich, **dadurch gekennzeichnet, dass** das Aufteilungsverhältnis des Flüssigkeitsrücklaufs an der dem oberen Ende der Trennwand (T) entsprechenden Stelle in der Weise eingestellt wird, dass der Anteil an hochsiedenden Schlüsselkomponenten im Flüssigkeitsrücklauf über den dem Abtriebsteil (3) des Entnahmeteils am dem oberen Ende der Trennwand (T) entsprechenden Kolonnenbereich 10 bis 80 %, bevorzugt 30 bis 50 % des in der Mittelsiederfraktion (B) zugelassenen Grenzwerts beträgt, dass die Heizleistung im Sumpfverdampfer unterhalb des dem unteren gemeinsamen Kolonnenbereich (6) entsprechenden Kolonnenbereichs in der Weise eingestellt wird, dass die Konzentration der leichtsiedenden Schlüsselkomponenten in der Flüssigkeit an der dem unteren Ende der Trennwand (T) entsprechenden Stelle 10 bis 80 %, bevorzugt 30 bis 50 % des in der Mittelsiederfraktion (B) zugelassenen Grenzwerts beträgt, dass die Leichtsiederfraktion (A) und die Hochsiederfraktion (C) aus unterschiedlichen Kolonnen entnommen werden, und dass der Betriebsdruck der Kolonne, aus der die Hochsiederfraktion (C) entnommen wird, bevorzugt um 0,1 bis 2 bar tiefer eingestellt wird als der Betriebsdruck der Kolonne, aus der die Leichtsiederfraktion (A) entnommen wird.

14. Verfahren nach Anspruch 13, **dadurch gekennzeichnet, daß** zwei thermisch gekoppelte Kolonnen eingesetzt werden, wobei der Sumpfstrom der ersten Kolonne in einem Verdampfer teilweise oder vollständig verdampft wird und anschließend der zweiten Kolonne zweiphasig oder in Form eines gasförmigen und eines flüssigen Stromes zugeführt wird.

15. Verfahren nach Anspruch 13 oder 14, **dadurch gekennzeichnet, dass** thermisch gekoppelte Kolonnen mit jeweils eigenem Verdampfer und/oder Kondensator verwendet werden.

16. Verfahren nach einem der Ansprüche 1 bis 8, 13 oder 14, **dadurch gekennzeichnet, daß** der Zulaufstrom (A, B, C) teilweise oder vollständig vorverdampft wird und der Kolonne zweiphasig oder in Form eines gasförmigen und eines flüssigen Stromes zugeführt wird.

17. Verfahren nach einem der Ansprüche 9 bis 11 oder 15, **dadurch gekennzeichnet, daß** in der Trennwandkolonne (TK) oder in den thermisch gekoppelten Kolonnen Böden eingesetzt werden, deren Druckverlust stetig mit zunehmender Gasbelastung ansteigt, bevorzugt um mindestens 10% pro Erhöhung des F-Faktors um 0.5 Pa^{0.5}.

## Claims

1. A process for the separation of C₅₊ cuts by distillation into a low-boiler (A), a medium-boiler (B) and a high-boiler fraction (C) in one or more dividing-wall columns (TK), in which a dividing wall (T) is arranged in the longitudinal direction of the column with formation of an upper, common column region (1), a lower, common column region (6), a feed part (2, 4) with rectifying section (2) and stripping section (4), and a withdrawal part (3, 5) with rectifying section (5) and stripping section (3), with feed of the C₅₊ cut (A, B, C) into the central region of the feed part (2, 4), discharge of the high-boiler fraction (C) from the bottom of the column, discharge of the low-boiler fraction (A) via the top of the column, and discharge of the medium-boiler fraction (B) from the central region of the withdrawal part (3, 5), **characterized in that** the dividing ratio of the liquid reflux at the upper end of the dividing wall (T) is set in such a way that the proportion of high-boiling key components in the liquid reflux over the stripping section (3) of the withdrawal part at the upper end of the dividing wall (T) is from 10 to 80%, preferably from 30 to 50%, of the limit value allowed in the medium-boiler fraction (B), and **in that** the heating power in the evaporator at the bottom of the dividing-wall column (TK) is set in such a way that the concentration of the low-boiling key components in the liquid at the lower end of the dividing wall (T) is from 10 to 80%, preferably from 30 to 50%, of the limit value allowed in the medium-boiler fraction (B).

2. A process as claimed in claim 1, **characterized in that** the liquid division at the upper end of the dividing wall (T) is regulated in such a way that the liquid load in the rectifying section (2) of the feed part (2, 4) does not drop below 30% of its normal value.

3. A process as claimed in claim 1 or 2, **characterized in that** the division of the liquid flowing out of the rectifying section (3) of the withdrawal part (3, 5) of the dividing-wall column (TK) into the withdrawn medium-boiler fraction (B) and the rectifying section (5) of the withdrawal part (3, 5) of the dividing-wall column (TK) is set by regulation in such a way that the amount of liquid introduced into the rectifying section (5) does not drop below 30% of its normal value.

4. A process as claimed in one of claims 1 to 3, **characterized in that** the medium-boiler fraction (B) is withdrawn in liquid form.

5. A process as claimed in one of claims 1 to 4, **characterized in that** the vapor stream at the lower end of the dividing wall (T) is set in such a way that the ratio of the vapor stream in the feed part (2, 4) to the vapor stream in the withdrawal part (3, 5) is from 0.8 to 1.2, preferably from 0.9 to 1.1, and **in that** the return from the upper common column part (1) is regulated in such a way that the ratio of the return stream in the feed part (2, 4) to the return in the withdrawal part (3, 5) is from 0.1 to 1.0, preferably from 0.3 to 0.6, preferably through the choice and/or dimensioning of separation-active internals and/or the installation of devices which produce a pressure loss.

6. A process as claimed in one of claims 1 to 5, **characterized in that** the withdrawal of the top stream (A) takes place under temperature control, with the measurement point for the control temperature being arranged in the upper, common part-region (1) of the column, at a point which is arranged from 3 to 8, preferably from 4 to 6, theoretical separation stages below the upper end of the column.

7. A process as claimed in one of claims 1 to 6, **characterized in that** the withdrawal of the high-boiler stream (C) takes place under temperature control, with the measurement point for the control temperature being arranged in the lower, common column region (6), from 3 to 8, preferably from 4 to 6, theoretical separation stages above the lower end of the column.

8. A process as claimed in one of claims 4 to 7, **characterized in that** the withdrawal of the medium-boiler fraction (B) takes place under level control, and the control quantity used is the liquid level in the evaporator or at the bottom of the column.

9. A process as claimed in one of claims 1 to 8, **characterized in that** it utilizes a dividing-wall column (TK) having from 20 to 60, preferably from 25 to 45, theoretical separation stages.

10. A process as claimed in claim 9, **characterized in that** each and every one of the column regions 1 to 6 has from 5 to 50%, preferably from 15 to 30%, of the total number of theoretical separation stages of the dividing-wall column (TK).

11. A process as claimed in claim 9 or 10, **characterized in that** the feed point for the stream (A, B, C) and the withdrawal point for the medium-boiler section (B) are arranged at different heights in the column, preferably separated by from 1 to 20, in particular by from 3 to 8, theoretical separation stages.

12. A process as claimed in one of claims 9 to 11, **characterized in that** sampling facilities are provided at the upper and lower ends of the dividing wall (T), via which liquid and/or gaseous samples can be withdrawn from the column continuously or at time intervals and analyzed with respect to their composition, preferably by gas chromatography.

13. A process for the separation of C₅₊ cuts by distillation into a low-boiler (A), a medium-boiler (B) and a high-boiler fraction (C) in thermally coupled columns having column regions (1, 2, 3, 4, 5, 6) which correspond to the column regions formed in a dividing wall (T) arranged in a dividing-wall column (TK) in the longitudinal direction of the column:
- upper common column region (1),
- lower common column region (6),
- feed part (2, 4) with rectifying section (2) and stripping section (4) and also
- withdrawal part (3, 5) with rectifying section (5) and stripping section (3),
with feed of the C₅₊ cut (A, B, C) into the central region of the column region corresponding to the feed part (2, 4), discharge of the high-boiler fraction (C) from the bottom of the column below the column region corresponding to the lower common column region (6), of the low-boiler fraction (A) via the top of the column above the column region corresponding to the upper common column region (1) and of the medium-boiler fraction (B) from a column region corresponding to the central region of the withdrawal part (3, 5), **characterized in that** the dividing ratio of the liquid reflux at the location corresponding to the upper end of the dividing wall (T) is set in such a way that the proportion of high-boiling key components in the liquid reflux over the column region corresponding to the stripping section (3) of the withdrawal part at the upper end of the dividing wall is from 10 to 80%, preferably from 30 to 50%, of the limit value allowed in the medium-boiler fraction (B), **in that** the heating power in the evaporator below the column region corresponding to the lower common column region (6) is set in such a way that the concentration of the low-boiling key components in the liquid at the location corresponding to the lower end of the dividing wall (T) is from 10 to 80%, preferably from 30 to 50%, of the limit value allowed in the medium-boiler fraction (B), **in that** the low-boiler fraction (A) and the high-boiler fraction (C) are withdrawn from different columns, and **in that** the operating pressure of the column from which the high-boiler fraction (C) is withdrawn is preferably set from 0.1 to 2 bar lower than the operating pressure of the column from which the low-boiler fraction (A) is withdrawn.

14. A process as claimed in claim 13, **characterized in that** two thermally coupled columns are employed, wherein the bottom stream from the first column is partially or fully evaporated in an evaporator and subsequently fed to the second column in two phases or in the form of a gaseous stream and a liquid stream.

15. A process as claimed in claim 13 or 14, **characterized in that** it utilizes thermally coupled columns which each have their own evaporator and/or condenser.

16. A process as claimed in one of claims 1 to 8 or 13 or 14, **characterized in that** the feed stream (A, B, C) is partially or fully pre-evaporated and fed to the column in two phases or in the form of a gaseous stream and a liquid stream.

17. A process as claimed in one of claims 9 to 11 or 15, **characterized in that** trays whose pressure loss increases constantly with increasing gas load, preferably by at least 10% per increase in the F factor by 0.5 Pa^{0.5}, are employed in the dividing-wall column (TK) or in the thermally coupled columns.

## Revendications

1. Procédé pour la séparation de coupes en C₅₊ par distillation dans une fraction à faible point d'ébullition (A), une fraction à point d'ébullition moyen (B) et une fraction à point d'ébullition élevé (C) dans une ou plusieurs colonnes à paroi de séparation (TK), dans laquelle ou dans lesquelles est disposée une paroi de séparation (T) dans la direction longitudinale de la colonne avec formation d'une zone de colonne commune supérieure (1), une zone de colonne commune inférieure (6), une section d'alimentation (2, 4) avec section d'enrichissement (2) et section d'épuisement (4) ainsi qu'une section de soutirage (3, 5) avec section d'enrichissement (5) et section d'épuisement (3), avec introduction de la coupe en C₅₊ (A, B, C) dans la zone moyenne de la section d'alimentation (2, 4), évacuation de la fraction à point d'ébullition élevé (C) hors du fond de la colonne, de la fraction à faible point d'ébullition (A) par la tête de colonne et la fraction à point d'ébullition moyen (B) de la zone moyenne de la section de soutirage (3, 5), **caractérisé en ce que** le rapport de répartition du reflux de liquide au niveau de l'extrémité supérieure de la paroi de séparation (T) est ajusté de telle façon à ce que la proportion de composants clés à point d'ébullition élevé dans le reflux de liquide par la section d'épuisement (3) de la section de soutirage au niveau de l'extrémité supérieure de la paroi de séparation (T) est de 10 à 80%, de préférence de 30 à 50% de la valeur limite admissible dans la fraction à point d'ébullition moyen (B), et que la puissance du chauffage dans l'évaporateur du fond de la colonne à paroi de séparation (TK) est ajustée de telle sorte que la concentration des composants clés à faible point d'ébullition dans le liquide au niveau de l'extrémité inférieure de la paroi de séparation (T) est de 10 à 80%, de préférence de 30 à 50% de la valeur limite admissible dans la fraction à point d'ébullition moyen (B).

2. Procédé selon la revendication 1, **caractérisé en ce que** le répartition du liquide au niveau de l'extrémité supérieure de la paroi de séparation (T) est réglé de telle façon que la charge de liquide dans la section d'enrichissement (2) de la section d'alimentation (2, 4) ne s'abaisse pas au-dessous de 30% de sa valeur normale.

3. Procédé selon la revendication 1 ou 2, **caractérisé en ce que** la répartition du liquide sortant de la section d'épuisement (3) de la section de soutirage (3, 5) de la colonne à paroi de séparation (TK) sur la fraction à point d'ébullition moyen soutirée (B) et la section d'enrichissement (5) de la section d'épuisement (3, 5) de la colonne à paroi de séparation (TK) est ajustée par un réglage de façon à ce que la quantité de liquide émise sur la section d'enrichissement (5) ne s'abaisse pas au-dessous de 30% de sa valeur normale.

4. Procédé selon l'une quelconque des revendications 1 à 3, **caractérisé en ce que** la fraction à point d'ébullition moyen (B) est soutirée sous forme liquide.

5. Procédé selon l'une quelconque des revendications 1 à 4, **caractérisé en ce que** le courant de vapeurs au niveau de l'extrémité inférieure de la paroi de séparation (T) est ajustée de telle façon que le rapport du courant de vapeurs dans la section d'alimentation (2, 4) au courant de vapeurs dans la section de soutirage (3, 5) est de 0,8 à 1,2, de préférence de 0,9 à 1,1, et que le reflux de la section de colonne commune supérieure (1) est ajustée de telle façon à ce que le rapport du courant de reflux dans la section d'alimentation (2, 4) au reflux dans la section de soutirage (3, 5) est de 0,1 à 1,0, de préférence de 0,3 à 0,6, de préférence en choisissant et/ou dimensionnant des installations ayant une action séparatrice et/ou en installant des dispositifs produisant des pertes de pression.

6. Procédé selon l'une quelconque des revendications 1 à 5, **caractérisé en ce que** le soutirage du courant de tête (A) se réalise avec une régulation de température, le point de mesure pour la température de régulation dans la zone partielle commune supérieure (1) de la colonne, est disposé en un point qui est disposé au-dessous de l'extrémité supérieure de la colonne autour de 3 à 8, de préférence de 4 à 6 plateaux de séparation théoriques.

7. Procédé selon l'une quelconque des revendications 1 à 6, **caractérisé en ce que** le soutirage du courant à point d'ébullition élevé (C) se réalise avec régulation de température, le point de mesure pour la température de régulation dans la zone de colonne commune inférieure (6) est disposé au-dessus de l'extrémité inférieure de la colonne autour de 3 à 8, de préférence de 4 à 6 plateaux de séparation théoriques.

8. Procédé selon l'une quelconque des revendications 4 à 7, **caractérisé en ce que** le soutirage de la fraction à point d'ébullition moyen (B) se réalise avec régulation de niveau, et le niveau de liquide dans l'évaporateur ou dans le fond de la colonne est employé comme grandeur de régulation.

9. Procédé selon l'une quelconque des revendications 1 à 8, **caractérisé en ce que** l'on emploie une colonne à paroi de séparation (TK) ayant de 20 à 60, de préférence ayant de 25 à 45 plateaux de séparation théoriques.

10. Procédé selon la revendication 9, **caractérisé en ce que**, chacune des zones de colonne 1 à 6 représente respectivement 5 à 50%, de préférence 15 à 30% du nombre total de plateaux de séparation théoriques de la colonne à paroi de séparation (TK).

11. Procédé selon la revendication 9 ou 10, **caractérisé en ce que**, le point d'alimentation eh courant (A, B, C) et le point de soutirage de la fraction à point d'ébullition moyen (B) sont disposés à une hauteur différente dans la colonne, séparés de préférence par 1 à 20, en particulier par 3 à 8 plateaux de séparation théoriques.

12. Procédé selon l'une quelconque des revendications 9 à 11, **caractérisé en ce que**, au niveau de l'extrémité supérieure et au niveau de l'extrémité inférieure de la paroi de séparation (TK) des possibilités de prélèvement d'échantillon sont installées par l'intermédiaire desquelles des échantillons liquides et/ou gazeux sont soutirés de façon continue ou à des intervalles de temps déterminés, de la colonne et sont analysés en ce qui concerne leur composition, de préférence par chromatographie en phase gazeuse.

13. Procédé pour la séparation par distillation de coupes en C₅₊ dans une fraction à faible point d'ébullition (A), une fraction à point d'ébullition moyen (B) et une fraction à point d'ébullition élevé (C) dans des colonnes couplées thermiquement avec des zones de colonne (1, 2, 3, 4, 5, 6), qui correspondent aux zones de colonne formées dans une paroi de séparation (T) disposée dans une colonne à paroi de séparation (TK) dans la direction longitudinale de la colonne :
- une zone de colonne commune supérieure (1),
- une zone de colonne commune inférieure (6),
- une section d'alimentation (2, 4) avec section d'enrichissement (2) et section d'épuisement (4) ainsi que
- une section de soutirage (3, 5) avec section d'enrichissement (5) et section d'épuisement (3),
avec introduction de la coupe en C₅₊ (A, B, C) dans la zone moyenne de la zone de colonne correspondant à la section d'alimentation (2, 4), évacuation de la fraction à point d'ébullition élevé (C) du fond de la colonne au-dessous de la zone de colonne correspondant à la zone de colonne commune inférieure (6), de la fraction à faible point d'ébullition (A) par la tête de colonne au-dessus de la section de colonne correspondant à la section de colonne commune supérieure (1) et de la fraction à point d'ébullition moyen (B) à partir d'une section de colonne correspondant à la zone moyenne de la section de soutirage (3, 5), **caractérisé en ce que** le rapport de répartition du reflux de liquide au point correspondant à l'extrémité supérieure de la paroi de séparation (T) est ajusté de façon à ce que la proportion de composants clés à point d'ébullition élevé dans le reflux de liquide par la zone de colonne correspondant à la section d'épuisement (3) de la section de soutirage à l'extrémité supérieure de la paroi de séparation (T) est de 10 à 80%, de préférence de 30 à 50% de la valeur limite admise dans la fraction à point d'ébullition moyen (B), que la puissance de chauffage dans l'évaporateur de fond au-dessous de la zone de colonne correspondant à la zone de colonne commune inférieure (6) est ajustée de façon à ce que la concentration des composants clés à faible point d'ébullition dans le liquide au point correspondant à l'extrémité inférieure de la paroi de séparation (T) soit de 10 à 80%, de préférence de 30 à 50% de la valeur limite admise dans la fraction à point d'ébullition moyen (B), que la fraction à faible point d'ébullition (A) et la fraction à point d'ébullition élevé (C) sont soutirées de différentes colonnes, et que la pression de fonctionnement de la colonne, à partir de laquelle est soutirée la fraction à point d'ébullition élevé (C), est ajustée de préférence de façon à être inférieure de 0,1 à 2 bars à la pression de fonctionnement de la colonne, à partir de laquelle est soutirée la fraction à faible point d'ébullition (A).

14. Procédé selon la revendication 13, **caractérisé en ce que** deux colonnes couplées thermiquement sont mises en oeuvre, dans lesquels le courant de fond de la première colonne est évaporé partiellement ou complètement dans un évaporateur, puis introduit dans la deuxième colonne sous forme diphasique ou sous forme d'un courant gazeux et d'un courant liquide.

15. Procédé selon la revendication 13 ou 14, **caractérisé en ce que** des colonnes couplées thermiquement ayant chacune leur propre évaporateur et/ou condenseur, sont employées.

16. Procédé selon l'une quelconque des revendications 1 à 8, 13 ou 14, **caractérisé en ce que** le courant d'alimentation (A, B, C) est pré-évaporé, partiellement ou complètement, et introduit dans la colonne sous forme diphasique ou sous forme d'un courant gazeux et d'un courant liquide.

17. Procédé selon l'une quelconque des revendications 9 à 11, ou 15, **caractérisé en ce que**, dans la colonne à paroi de séparation (TK) ou dans les colonnes couplées thermiquement, des plateaux sont mis en oeuvre dont la perte de pression augmente toujours avec une augmentation de la charge de gaz, de préférence d'au moins 10% pour une augmentation du facteur F de 0,5 Pa^{0,5}.
